## Europäisches Patentamt

## European Patent Office

## Office européen des brevets

(11) Publication number: **0 232 942**
**B1**

(12) **EUROPEAN PATENT SPECIFICATION**

(45) Date of publication of the patent specification:
**07.03.90**

(21) Application number: **87200163.1**

(22) Date of filing: **03.02.87**

(51) Int. Cl.⁴: **B60B 7/06, B60B 7/02**

(54) Hubcap with fastening members for mounting it to a vehicle wheel and to the relating hub assembly.

(30) Priority: **07.02.86 NL 8600295**

(43) Date of publication of application:
**19.08.87 Bulletin 87/34**

(45) Publication of the grant of the patent:
**07.03.90 Bulletin 90/10**

(84) Designated Contracting States:
**AT BE CH DE ES FR GB GR IT LI LU NL SE**

(56) References cited:
**FR-A- 643 852**
**FR-A- 2 071 398**
**FR-A- 2 273 680**
**US-A- 3 356 421**
**US-A- 3 549 204**
**US-A- 4 382 635**
**US-A- 4 457 560**

(73) Proprietor: **de Graaf, Arie Benjamin, Leidsestraat 36,
NL-3481 EX Harmelen(NL)**

(72) Inventor: **de Graaf, Arie Benjamin, Leidsestraat 36,
NL-3481 EX Harmelen(NL)**

(74) Representative: **Lips, Hendrik Jan George, Ir. et al,
HAAGSCH OCTROOIBUREAU Breitnerlaan 146,
NL-2596 HG Den Haag(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

The invention relates to a hubcap with fastening members for mounting it to a vehicle wheel and to the relating hub assembly, said fastening members comprising a cup shaped element provided with a flanged top end portion which can cooperate with a portion of the hubcap present at some distance from the bottom of said cup shaped element, said bottom being provided with an opening for receiving a stud or bolt for fastening said cup shaped element to the hub assembly of the vehicle.

Such a hubcap is known from FR-A 643 852. This known hubcap is provided with a central opening in which one cup shaped element is inserted which by means of one bolt is mounted to the hub assembly of the vehicle. So only the central portion of the hub cap is pressed towards the hub assembly and said central portion can move further towards said hub assembly by the effect of the flow of air when a car, provided with said hubcaps is driving. This can give rise to flutter of the hubcap so to undesirable noise and the possibility of breaking of the hubcap.

When using the known hubcap it is necessary that the hub assembly of the vehicle is provided with a threadened bore which mostly is not present at all.

The object of the invention is to remove these disadvantages and to that end the hubcap according to the invention is provided with at least three cup shaped elements, one for each stud or bolt by which the wheel is connected to the hub assembly, said hubcap having at least one conical portion extending from its surface in the direction of the cup shaped elements and provided with at least one flanged inwardly directed rim for engaging the flanged portion of said cup shaped elements, means being present for connecting the cup shaped elements to said flanged rim of the conical portion or portions of the hubcap.

So instead of only one cup shaped element, the hubcap according to the invention is provided with at least three elements which are fixedly mounted to said hubcap, so that a better connection between the hubcap and the hub assembly is obtained. Because for the connection of the hubcap use is made of the studs or bolts necessary for connecting the wheel to the hub assembly, no additional bolt is needed and each vehicle can be provided with a hubcap according to the invention.

According to an embodiment of the invention the wall of each cup shaped element is conically widened from its bottom. By this as well the manufacturing of the cup shaped element as such and the insertion of a bolt in it are made easier.

According to an embodiment of the invention the flanged top end portion of the cup shaped element can be connected to the hub cap by means of a flat ring, both sides of which are adhesive.

It is, however, also possible to press the flanged top end portion of the cup shaped elements against the hubcap by means of a clamp ring shifted onto the cup wall.

A further possibility is to provide the wall of the cup shaped elements with at least one outwardly extending cam which can snap behind the flanged inwardly directed rim of the hubcap.

According to a further embodiment of the invention the cup shaped elements can be integrally formed with the central portion of the hubcap in which case the further ring shaped portion of the hubcap can be provided with one conical portion, the inwardly directed rim of which being fixed to said central portion.

The advantage of this is that, if necessary, the ring shaped portion of the hubcap can be replaced afterwards when it is damaged. The possibility of damage of this ring shaped portion being much greater than the possibility of damage of the central portion.

The various portions of the hubcap as described above in particular can be manufactured by injection moulding from a temperature resistant plastic, so that these parts can have a considerable strength.

Other objects and advantages of the present invention will become apparent from the description of embodiments shown in the drawing, in which:

Fig. I is showing a view of a vehicle wheel with a hubcap according to the invention mounted on it;

Fig. 2 is showing a cross-sectional view over a portion of the wheel along the line II-II of Fig. I, in which a given way of connection is used of the cup shaped elements to the hubcap;

Fig. 3 is showing a cross-sectional view of a cup shaped element with the related portion of the hubcap to show two different ways of connection of the cup shaped element to the hubcap;

Fig. 4 is showing a cross-sectional view of a cup shaped element and the related portion of the hubcap the connection between these both parts being obtained in a still other way;

Fig. 5 is showing a plan view of the cup shaped element of Fig. 4;

Fig. 6 is showing a cross-sectional view of a cup shaped element with the related portion of the hubcap, for the connection of both parts use being made of a bayonet connection;

Fig. 7 is showing a plan view of the cup shaped element of Fig. 6; and

Fig. 8 is showing a cross-sectional view of a hubcap, the central portion of which is integrally formed with the cup shaped elements.

In the embodiment shown in the Figs.I and 2 the hubcap I is mounted on a wheel 2 on which a tire 3 is present.

The hubcap I is provided with a number of cup shaped elements 4, the bottom 24 of which is provided with an opening 25 for receiving the wheel bolt 5, so that the head of this is pressing the bottom of the cup shaped element against the wheel. It is obvious that also an outwardly extending stud can be present on which a nut is screwed.

The hubcap I can be provided with decorations such as in the shape of openings 6 and cutter shaped impressed portions 7.

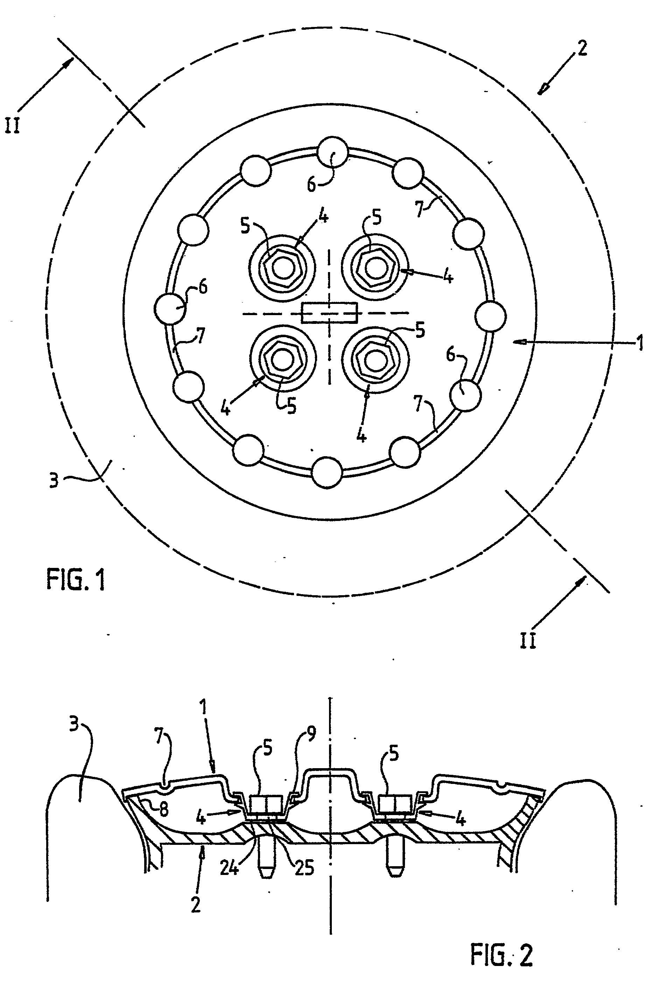

In particular from Fig. 2 it appears that the hubcap I is engaging the wheel rim 8 and is fixed by means of the cup shaped elements 4.

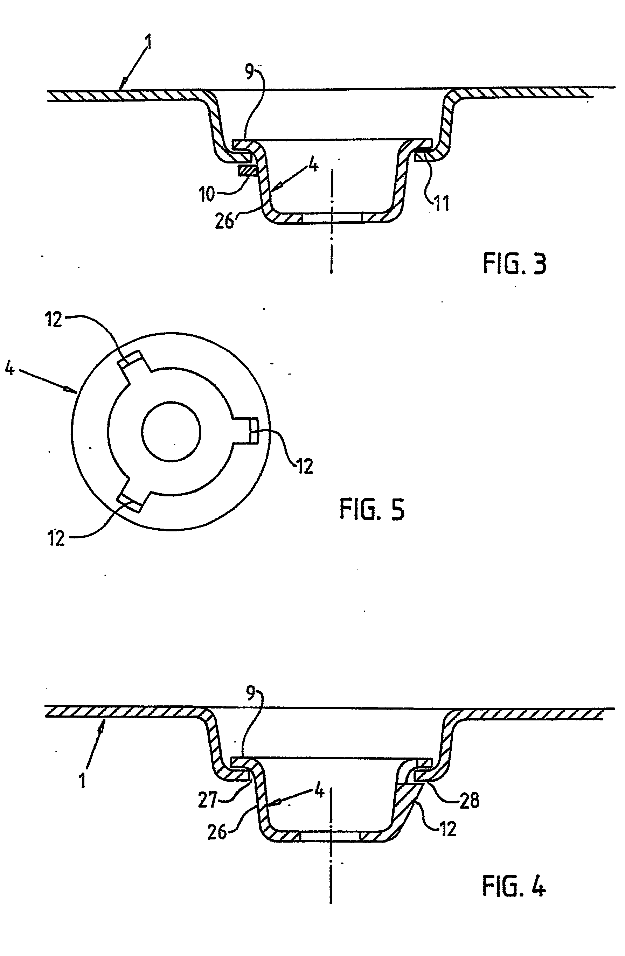

Fig. 3 is showing, at an enlarged scale, a cup shaped element 4 which is mounted to the hubcap l. In the left part of Fig. 3 it is shown that the mounting of the cup shaped element 4 to the hubcap l can take place because the rim 9 of the element 4 is pressed against the hubcap l by means of a ring l0 which is shoved onto the cup shaped element 4 and is clamped thereon, said element preferably having a somewhat conical side wall 26. It will be obvious that the conical side wall can be provided with a somewhat depressed portion for obtaining a solid fastening of the ring l0.

In the right portion of Fig. 3 it is shown that the rim 9 of the cup shaped element 4 can be connected to the hubcap l by means of a ring ll both sides of which being adhesive.

The Figs. 4 and 5 are showing the possibility that the side wall 26 of the cup shaped element 4 is provided with three tapered cams l2, so that the cup shaped element 4 can be received in the opening 27 of the hubcap l during which the rim 28 of the hubcap will snap over the cams l2 by which a solid connection between the hubcap l and the cup shaped element 4 can be obtained.

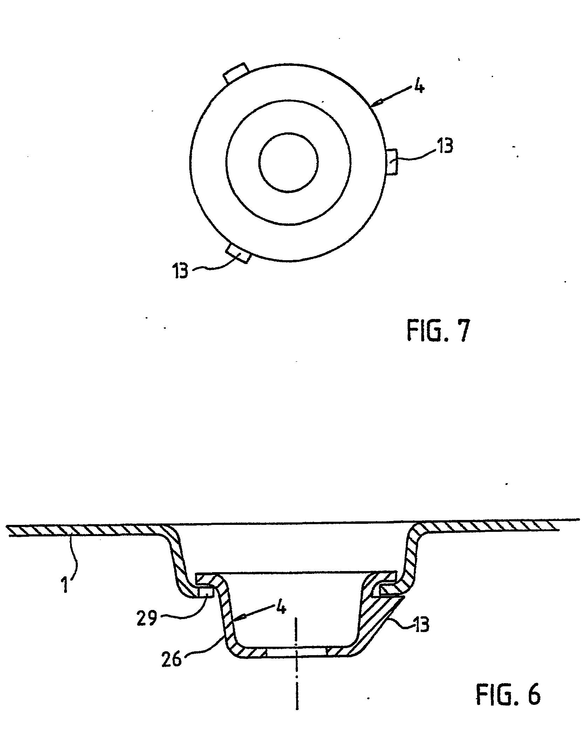

The Figs. 6 and 7 are showing the possibility to use a bayonet connection between the hubcap l and the cup shaped element 4, to which end the wall 26 of the element 4 again is provided with cams l3 and the rim 28 of the hubcap l with recessions 29 through which the cams l3 can pass whereafter by rotation of the cup shaped element 4 in respect of the hubcap l the cup shaped element can be fixedly clamped.

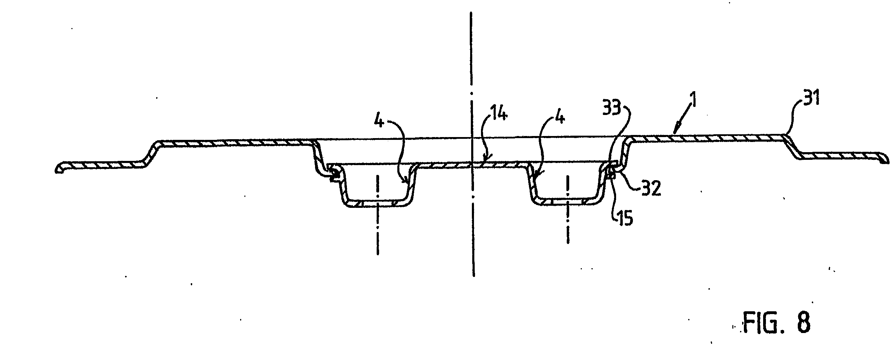

Finally Fig. 8 is showing the possibility to execute the cup shaped elements 4 integral with the central portion l4 of the hubcap l, said hubcap further consisting of the annular portion 3l, the inner rim 32 of which is pressed against the circumferential rim 33 of the central portion l4 e.g. by means of the ring l5 about in the same way as described for the ring l0 in case of the embodiment according to Fig. 3. It will be obvious that the ring l5 is engaging the cup shaped element 4 only with a small part of its inner circumference. Again use can be made of an adhesive ring, as indicated in Fig. 3, or of snapping portions as indicated in Fig. 4 or of a bayonet connection as indicated in the Figs. 6 and 7.

## Claims

1. Hubcap (1) with fastening members (4) for mounting it to a vehicle wheel (2) and to the relating hub assembly, said fastening members comprising a cup shaped element (4) provided with a flanged top end portion (9, 33) which can cooperate with a portion (28, 32) of the hubcap (1, 31) present at some distance from the bottom (24) of said cup shaped element (4), said bottom (24) being provided with an opening (25) for receiving a stud or bolt (5) for fastening said cup shaped element (4) to the hub assembly of the vehicle, characterized in that said hubcap (1, 31) is provided with at least three cup shaped elements (4), one for each stud or bolt (5) by which the wheel is connected to the hub assembly, said hubcap having at least one conical portion extending from its surface in the direction of the cup shaped elements (4) and provided with at least one flanged inwardly directed rim (28, 32) for engaging the flanged portion (9, 33) of said cup shaped elements (4), means being present for connecting the cup shaped elements (4) to said flanged rim (28, 32) of the conical portion or portions of the hubcap.

2. Hubcap according to claim 1, characterized in that the wall (26) of each cup shaped element (4) is conically widened from its bottom (24).

3. Hubcap according to claim 1 or 2, characterized in that the flanged top end portion (9) of the cup shaped elements (4) is connected to the hubcap (1) by means of a flat ring (11) both sides of which are adhesive.

4. Hubcap according to claim 1 or 2, characterized in that the flanged top end portion (9) of the cup shaped elements (4) is pressed against the hubcap (1) by means of a clamp ring (10) shifted onto the cup wall (26).

5. Hubcap according to claim 1 or 2, characterized in that the wall (26) of the cup shaped elements (4) is provided with at least one outwardly extending cam (12) which can snap behind the flanged inwardly directed rim (28, 32) of the hubcap (1, 31).

6. Hubcap according to one of the preceding claims, characterized in that the cup shaped elements (4) are integrally formed with the central portion (14) of the hubcap (1), the further ring shaped portion (31) of the hubcap being provided with one conical portion, the inwardly directed rim (32) of which is fixed to said central portion (14).

## Patentansprüche

1. Radzierblende (1) mit Befestigungsteilen (4) zum Aufmontieren dieser an ein Kraftfahrzeugrad (2) und seine entsprechende Radnabe, welche Befestigungsteile ein schalenförmiges Element (4) umfassen, das mit einem gebördelten Oberendteil (9, 33) versehen ist, der mit einem Teil (28, 32) der Radzier blende (1, 31), der sich in eniger Entfernung vom Boden (24) des schalenförmigen Elements (4) befindet, zusammenwirken kann, welcher Boden (24) mit einer Öffnung (25) zur Aufnahme einer Stiftschraube oder eines Bolzens (5) zur Befestigung des schalenförmigen Elements (4) an die Radnabe des Fahrzeugs versehen ist, dadurch gekennzeichnet, dass die Radzierblende (1, 31) mit wenigstens drei schalenförmigen Elementen (4) versehen ist, eins für jede Stiftschraube oder jeden Bolzen (5) wodurch das Rad mit der Radnabe verbunden ist, welche Radzierblende wenigstens einen kegelförmigen Teil aufweist, der sich von ihrer Oberfläche in der Richtung der schalenförmigen Elemente (4) erstreckt und mit wenigstens einem nach innen gerichteten gebördelten Rand (28, 32) zur Aufnahme des gebördelten Teiles (9, 33) des schalenförmigen Elements (4) versehen ist, wobei Mittel zur Verbindung der schalenförmigen Elemente (4) mit dem gebördelten Rand (28, 32) des kegelförmigen Teiles oder Teile der Radzierblende vorgesehen sind.

2. Radzierblende gemäss Anspruch 1, dadurch gekennzeichnet, dass die Wand (26) jedes schalenförmigen Elements (4) von seinem Boden (24) ab kegelförmig erweitert ist.

3. Radzierblende gemäss Anspruch 1 oder 2, dadurch gekennzeichnet, dass der gebördelte Oberendteil (9) der schalenförmigen Elemente (4) mit der Radzierblende (1) mittels eines beiderseitig klebenden flachen Ringes (11) verbunden ist.

4. Radzierblende gemäss Anspruch 1 oder 2, dadurch gekennzeichnet, dass der gebördelte Oberendteil (9) der schalenförmigen Elemente (4) gegen die Radzierblende (1) mittels eines Klemmringes (10) gedrückt wird, der auf die Wand der Schale (26) geschoben ist.

5. Radzierblende gemäss Anspruch 1 oder 2, dadurch gekennzeichnet, dass die Wand (26) der schalenförmigen Elemente (4) mit wenigstens einem nach aussen ragenden Nocken (12) versehen ist, der hinter den nach innen gerichteten gebördelten Rand (28, 32) der Radzierblende (1, 31) schnappen kann.

6. Radzierblende gemäss einem der vorhergehenden Ansprüche, dadurch gekennzeichnet, dass die schalenförmigen Elemente (4) integral mit dem zentralen Teil (14) der Radzierblende (1) gebildet sind, wobei der weitere ringförmige Teil (31) der Radzierblende mit einem konischen Teil versehen ist, dessen nach innen gerichteter Rand (32) an dem zentralen Teilen (14) befestigt ist.

## Revendications

1. Enjoliveur (1) à éléments de fixation (4) pour le montage de ceux-ci à une roue de véhicule (2) et à son moyeu correspondant, lesdits éléments de fixation comprenant un élément en forme de cuvette (4) munie d'une partie d'extrémité supérieure rabattue (9, 33) qui peut coopérer avec une partie (28, 32) de l'enjoliveur (1, 31) se trouvant à quelque distance du fond (24) de l'élément en forme de cuvette (4), ledit fond (24) étant muni d'une ouverture (25) pour recevoir un embout fileté ou un boulon (5) pour la fixation de l'élément en forme de cuvette (4) au moyeu du véhicule, caractérisé par le fait que l'enjoliveur (1, 31) est muni d'au moins trois éléments en forme de cuvette (4), un pour chaque embout fileté ou boulon (5) par lequel la roue est reliée au moyeu, ledit enjoliveur possédant au moins une partie conique s'étendant à partir de sa surface dans la direction des éléments en forme de cuvette (4) et munie d'au moins un bord (28, 32) rabattu dirigé vers l'interieur pour recevoir la partie rabattue (9, 33) de l'élément en forme de cuvette (4), des moyens étant prévus pour relier l'élément en forme de cuvette (4) au bord rabattu (28, 32) de la partie ou des parties coniques de l'enjoliveur.

2. Enjoliveur selon la revendication 1, caractérisé par le fait que la paroi (26) de chaque élément en forme de cuvette (4) est élargie coniquement à partir de son fond (24).

3. Enjoliveur selon la revendication 1 ou 2, caractérisé par le fait que la partie d'extrémité supérieure rabattue (9) des éléments en forme de cuvette (4) est reliée à l'enjoliveur (1) à l'aide d'un anneau plat (11) collant des deux côtés.

4. Enjoliveur selon la revendication 1 ou 2, caractérisé par le fait que la partie d'extrémité supérieure rabattue (9) des éléments en forme de cuvette (4) est pressée contre l'enjoliveur (1) à l'aide d'un anneau de serrage (10) glissé sur la paroi de la cuvette (26).

5. Enjoliveur selon la revendication 1 ou 2, caractérisé par le fait que la paroi (26) des éléments en forme de cuvette (4) est munie d'au moins une came (12) faisant saillie vers l'extérieur qui peut se glisser derrière le bord rabattu (28, 32) dirigé vers l'intérieur de l'enjoliveur (1, 31).

6. Enjoliveur selon l'une quelconque des revendications précédentes, caractérisé par le fait que les éléments en forme de cuvette (4) sont formés intégralement avec la partie centrale (14) de l'enjoliveur (1), la partie annulaire ultérieure (31) de l'enjoliveur étant munie d'une partie conique dont le bord (32) dirigé vers l'intérieur est fixé à la partie centrale (14).

FIG. 1

FIG. 2

**FIG. 3**

**FIG. 5**

**FIG. 4**

FIG. 7

FIG. 6

FIG. 8

EP 0 232 942 B1